# EUROPÄISCHE PATENTSCHRIFT

(11) **EP 1 011 397 B1**
(45) Veröffentlichungstag und Bekanntmachung des Hinweises auf die Patenterteilung: **18.02.2004**
(21) Anmeldenummer: 99945944.9
(22) Anmeldetag: 08.07.1999
(51) Int. Cl.: A47G 19/12, F25D 23/02

(54) **WÄRMEISOLIEREND AUSGEBILDETER DECKEL**
HEAT-INSULATING LID
COUVERCLE THERMO-ISOLANT

(30) Priorität: 09.07.1998 DE 29812252 U; 21.10.1998 DE 19848381
(43) Veröffentlichungstag der Anmeldung: 28.06.2000
(73) Patentinhaber: Schmidt, Angela, 94474 Vilshofen (DE); Schmidt, Rudolf, 94474 Vilshofen (DE); Aug, Michaela, 94330 Salching (DE)
(72) Erfinder: Schmidt, Angela, 94474 Vilshofen (DE); Schmidt, Rudolf, 94474 Vilshofen (DE); Aug, Michaela, 94330 Salching (DE)
(74) Vertreter: Schlenk, Manfred, Dipl.-Ing.
(86) Internationale Anmeldenummer: PCT/DE1999/002113
(87) Internationale Veröffentlichungsnummer: WO 2000/002473

(56) Entgegenhaltungen:
- EP-A- 0 224 038
- DE-A- 2 106 817
- DE-A- 4 302 743
- DE-U- 29 611 084
- FR-A- 2 447 174
- US-A- 4 065 336
- US-A- 5 520 014

## Beschreibung

Die Erfindung betrifft einen wärmeisolierend ausgebildeten Deckel zur Abdeckung eines Gefässes, wie einem Topf oder einer Schüssel, der auf seiner Bodenseite mit einer flächenhaften Dichtungsschicht für die Auflage auf dem Gefäß versehen ist.

Abgedeckte Gefäße dienen meist zum Aufbewahren von Lebensmitteln und Getränken. Sie haben aber den Nachteil, daß sie den Behälterinhalt, beispielsweise Lebensmittel, nicht über einen längeren Zeitraum kalt oder auf einer für den Verzehr richtigen Temperatur halten. In der Praxis werden deshalb meist sogenannte Kühlboxen angewendet, wie sie beipsielsweise die US-Patentschrift 4 065 336 zeigt. Für diese Kühlbox ist es charakteristisch, daß in den Begrenzungswänden und im Verschlußdeckel Hohlräume zur Einbringung eines wärmespeichernden Mittels, wie einem Gel vorgesehen sind. Das wärmespeichernde Mittel liegt dabei auf einer Bodenplatte auf, die lose im Deckelrahmen gehalten wird. Nach einer anderen Ausgestaltung, wie sie das DE-U-2 96 11 084 zeigt, kommunizieren diese Hohlräume über dafür vorgesehene Öffnungen mit dem Innenraum der Kühlbox. Es ist dies eine altbekannte Technik, wie die Einleitung der Patentschrift zeigt. Mit einer Kühlbox bereitet es jedoch Schwierigkeiten, wenn der Inhalt von Gefäßen unterschiedlicher Größe und Querschnittsform für eine bestimmte Zeit auf einer gewünschten Temperatur gehalten werden soll.

Nach der Deutschen Offenlegungsschrift 195 02 018 A1 wird statt einer Kühlbox für die Gefäße ein Deckel verwendet, der in Richtung auf das Gefäß ausgeformt ist und so - zwar an unterschiedlichen Aufliegestellen - Gefäße unterschiedlicher Größe abzudecken erlaubt. Nach einer Variante kann dabei im Kühlungsfall in die Ausformung ein Kühlmittel, wie Eis eingelegt und gegebenenfalls auch abgedeckt werden. Das führt aber zu einer relativ aufwendigen und wenig handlichen Form, bei der im übrigen die Gefahr eines ungewollten Flüssigkeitsübertritts von Schmelzwasser gegeben ist.

Der Erfindung liegt die Aufgabe zugrunde den geschilderten Schwierigkeiten in zuverlässiger Weise zu begegnen und den Deckel einfach handhabbar zu gestalten.

Gemäß der Erfindung wird dies bei einem wärmeisolierend ausgebildeter Dekkel durch eine Ausbildung nach den Merkmalen des Anspruchs 1 erreicht.

Eine vorteilhafte Ausgestaltung besteht darin, daß zur Hemmung unerwünschter seitlicher Bewegungen des Deckels die Dichtungsschicht mit einer gleithemmenden Oberflächengestaltung in Form einer Vielzahl kleiner und zugleich abdichtender Noppen oder einer Rillung versehen ist.

Weitere Ausgestaltungen der Erfindung sind in den Unteransprüchen 3 bis 8 angegeben.

Nachstehend wird die Erfindung anhand einer, Ausführungsbeispiele zeigenden Zeichnung näher erläutert, in der
- die Figur 1: das Schnittbild eines Deckels in Seitenansicht
- die Figur 2: eine ungeschnittene Seitenansicht des Deckels
- die Figur 3: eine konstruktive Variante für die Verankerung des Unterteils am Oberteil
zeigt.

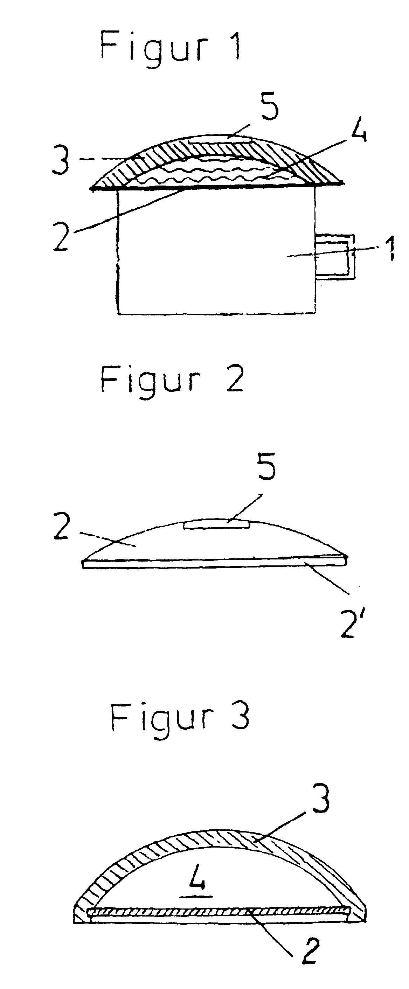

In der Figur 1 ist ein Gefäß 1 in Form eines Kochtopfes mit Henkel gezeigt, dessen Öffnung mit einem erfindungsgemäßen Deckel abgedeckt ist. Der Deckel 1 besteht aus einem Unterteil 2 und einem Oberteil 3. Das Oberteil 3 hat die Form einer abgeflachten Kugelkalotte und überspannt das Unterteil 2 unter Bildung eines Hohlraumes der mit einem wärmespeichernden Material 4, beispielsweise mit einem Gel, wie es für die bekannten Kühlakkus üblich ist, ausgefüllt ist. Das Oberteil 3 und das Unterteil 2 sind beispielsweise durch eine Schweißnaht fest und dicht bezüglich des Gel verschweißt. Das Material des Oberteils 3 und des Unterteils 2 kann ein schlagfester, kälte- und wärmebeständiger Kunststoff bekannter Art sein. Wesentlich für das Ausführungsbeispiel ist, daß die Wandstärke des Oberteils 3 wesentlich stärker ist als die des Unterteils 2. Dadurch wird erreicht, daß der Wärmewiderstand vom Außenraum zum wärmespeichernden Material 4 erheblich größer ist als der Wärmewiderstand vom Topfinnenraum über das als Bodenplatte dienende Unterteil 2 zum wärmespeichernden Material 4. Die Aufwärmung des wärmespeichernden Materials 4 wird daher im Kühlungsfall im wesentlichen von der im Topfinnenraum vorhandenen Wärme bestimmt und nur unwesentlich von der äußeren Umgebung des Oberteils 3.

In der Figur 2 ist - zur besseren Erkennbarkeit - die als Auflagefläche dienende Dichtungsfläche 2' in der Stärke hervorgehoben dargestellt. In der Praxis richtet sich die Stärke der zweckmäßig elastischen Dichtungsschicht 2' zum einen nach dem zulässigen Wärmewiderstand, der wesentlich geringer sein soll als der über das Oberteil 3 und zum anderen nach den Unebenheiten des jeweiligen Gefäßrandes, auf dem die Dichtungschicht 2' möglichst ohne jede Luftspaltbildung aufliegen soll.

Das Oberteil 3 und das Unterteil 2 können auch aus unterschiedlichen Materialien bestehen, beispielsweise das Oberteil 2 aus Hartschaum oder mit einer mechanischen Schutzschicht überzogenem Styropor und das Unterteil aus einer Platte relativ gut leitenden Kunststoffes oder aus Metall. Das Oberteil 3 kann zur Einhaltung der einleitend dargelegten Wärmewiderstandsbedingung auf der dem Hohlraum zugewandten Fläche auch mit wärmedämmenden Material versehen werden, das beispielsweise in der erforderlichen Stärke aufgespritzt, aufgeklebt oder auch nur eingelegt und verankert ist. In diesen Fällen kann das Oberteil 3 dann auch aus Metall bestehen. Als Metall wird zweckmäßig Edelstahl verwendet. Die Verankerung des Unterteils 2 an dem Oberteil 3 kann auf unterschiedlichste Weise erfolgen. Im einfachsten Fall werden beide Teile miteinander verklebt oder verschweißt. Eine empfehlenswerte Verankerung kann auch darin bestehen, daß - so wie in der Figur 3 dargestellt - das als Bodenplatte ausgebildete Unterteil 2 in eine umlaufende rillenförmige Ausnehmung des Oberteils 3 eingesetzt wird, was sich besonders einfach dann realisieren läßt, wenn beide Teile etwas elastisch sind oder nach dem Zusammenfügen beider Teile eine Bördelung vorgenommen wird.

Das wärmespeichernde Material 4 wird zweckmäßig von einer eigenen, das wärmespeichernde Material 4 hermetisch einschließenden Kunststoffumhüllung beziehungsweise einem solchen Kunststoffbeutel umschlossen. Solche Einschließungsarten sind auf dem Gebiet der Kälteakkus an sich bekannt. Ein solcher Beutel kann dann in den erwähnten Hohlraum eingelegt werden und liegt in der Normallage des Deckels auf dem Unterteil 2 innen satt auf und bestimmt damit dessen Temperatur.

Vor der Anwendung wird der erfindungsgemäße Deckel zunächst - je nach Anwendungsfall - in ein Gefrierfach oder eine Gefriertruhe oder in heißes Wasser gelegt und auf die gewünschte Temperatur gebracht. Dann ist er zum bestimmungsgemäßen Auflegen auf ein Gefäß einsatzfähig. Beim Einsatz nimmt das wärmespeichernde Material 4 im Kühlfall Wärme aus dem Topfinneren auf oder gibt im Warmhaltefall Wärme an das im Topfinneren befindliche Gut ab. Da in beiden die Luftzirkulation möglichst nur im Raum zwischen dem Gut und der Bodenfläche des Unterteils 2 erfolgen soll, empfiehlt es sich für ein dichtes Aufliegen der Bodenfläche des Unterteils 2 auf dem Gefäßrand zu sorgen. Es bildet sich sonst über Spalte ein die Kühlwirkung beziehungsweise die Warmhaltung beeinträchtigender Luftaustausch mit dem Außenraum. Durch die bereits erwähnte elastische Ausbildung einer Dichtungsschicht 2' auf der Aussenseite der Bodenfläche des Unterteils 2 läßt sich das satte Aufliegen sicherstellen. Die Dichtungsschicht 2' kann auch die Form einer umlaufender Randfläche haben, deren radiale Erstreckung den Durchmessern üblicher Töpfe entspricht. Das Material dieser Dichtungsfläche, beziehungsweise Schicht 2' wird zweckmäßig auch dahingehend ausgewählt, daß Bewegungen des Unterteils 2 gegenüber dem Gefäßrand gehemmt werden. Dadurch wird ein unerwünschtes Abgleiten des Deckels vom Gefäß weitgehend vermieden. Zu diesem Zweck kann auch die Oberfläche der Dichtungsfläche entsprechend geformt, beispielsweise mit herausstehenden kleinsten Noppen oder einer Rillung versehen werden. Solche Mikro-Noppen sind an sich von Kühlakkus her bekannt.

Die Deckelform ist beim Ausführungsbeispiel kreisförmig und die Auflagefläche des Unterteils 2 ist ebenflächig. Dies ermöglicht die Verwendung sowohl bei Töpfen, die meist einen kreisförmigen Querschnitt haben, als auch bei Schüsseln, die meist eine quadratischen Querschnitt aufweisen.

Die Ausführung mit einer dichten Verbindung von Unterteil 2 und Oberteil 3 weist den zusätzlichen Vorteil einer erleichterten Reinhaltung und Hygiene auf, da es sich in der Praxis nicht vermeiden läßt, daß Speisenreste oder ähnliches an die Abdeckung beziehungsweise den Deckel und damit in sonst unvermeidbare Spalte gelangen, wo sie nur schwer entfernbar sind.

In den Figuren 1 und 2 ist im Oberteil 3 jeweils ein die Handhabung erleichtender, vorzugsweise versenkbarer Handgriff 5 mit dargestellt. In dem Oberteil kann auch in an sich bekannter Weise eine Öffnung mit einem aufklappbaren Verschlußdeckel, die beispielsweise der Aufnahme von Servierbesteckteilen dient, vorgesehen werden.

## Patentansprüche

1. Wärmeisolierend ausgebildeter Deckel zur Abdeckung eines Gefässes (1), der auf seiner Bodenseite mit einer flächenhaften Dichtungsschicht (2') für die Auflage auf dem Gefäß versehen ist, bestehend aus einem wärmeisolierenden Oberteil (3) und einem demgegenüber wesentlich weniger wärmeisolierenden Unterteil (2), von denen der Oberteil (3) den Unterteil (2) unter, Bildung eines Hohlraumes (4) überspannend, fest und dicht mit dem Unterteil (2) verbunden ist, und in dem Hohlraum (4) ein, vorzugsweise duktiles, Wärmespeichermittel an der Innenseite des Unterteiles (2) anliegend angeordnet ist, und desweiteren die auf der äußeren ebenflächig ausgebildeten Bodenfläche des Unterteils (2) befindliche Dichtungsschicht (2') ebenfalls ebenflächig und seitliche Bewegungen des Deckels auf dem mit ihm abzundeckenden Gefäß (1) hemmend ausgebildet ist.

2. Wärmeisolierend ausgebildeter Deckel nach Anspruch 1, **dadurch gekennzeichnet, daß** die auf der äußeren Bodenfläche des Unterteils befindliche Dichtungsschicht (2') aus gleithemmendem Material besteht.

3. Wärmeisolierend ausgebildeter Deckel nach Anspruch 1, dadurch gekenn-Dichtungsschicht die Form einer umlaufenden Randfläche hat, deren radiale Erstreckung den Durchmessern üblicher Töpfe entspricht.

4. Wärmeisolierend ausgebildeter Deckel nach Anspruch 1, 2 oder 3, dadurch zeichnet, daß die Dichtungsschicht (2') mit einer gleithemmenden Oberflächengestaltung versehen ist, insbesondere in Form einer Vielzahl kleiner und zugleich abdichtender Noppen.

5. Wärmeisolierend ausgebildeter Deckel nach einem der vorhergehenden Ansprüche, **dadurch gekennzeichnet, daß** dem Oberteil (3) eine zusätzliche Wärmedämmung zugeordnet ist, vorzugsweise in Form einer wärmedämmenden Innenschicht.

6. Wärmeisolierend ausgebildeter Deckel nach einem der vorhergehenden Ansprüche, **dadurch gekennzeichnet, daß** das Wärmespeichermittel eine, vorzugsweise einen Gefrierpunkt unter Null Grad aufweisende Flüssigkeit, oder ein Gel ist.

7. Wärmeisolierend ausgebildeter Deckel nach einem der vorhergehenden Ansprüche, **dadurch gekennzeichnet, daß** der Oberteil (3) mit einem vorzugsweise versenkbaren Handgriff (5) versehen ist.

8. Wärmeisolierend ausgebildeter Deckel nach einem der vorhergehenden Ansprüche, **dadurch gekennzeichnet, daß** im Oberteil (3) eine von außen aufklappbare öffnung für die Aufnahme von Besteck oder dergleichen vorgesehen ist.

## Claims

1. Heat-insulating lid for covering a receptacle (1), the bottom of said lid has a flat sealing layer (2') designed to be placed onto the receptable (1), consisting of a heat-insulating upper part (3) and a lower part (2) which is less heat-insulating in relation to the upper part (3), said upper part (3) which is solid and thighly connected with the lower part (2) covers the lower part (2) in such a way that a hollow space is formed, in which a preferable ductile heat-storing medium (4) is positioned, said flat sealing layer (2') has a design hampering lateral moving of the lid on the receptable (1).

2. Heat-insulating lid according to claim 1 **characterized in that**, the sealing layer (2') positioned on the outer side of the lower part (2) consists of an antislide material.

3. Heat-insulating lid according to claim 1 **characterized in that**, the sealing layer (2') has the shape of a flat ring peripherial positioned on the outer side of the lower part (2), the radial extension of which corresponds which the common diameters of receptables (1).

4. Heat-insulating lid according to claim 1, 2 or 3 **characterized in that**, the surface of the sealing layer (2') has an antislide design, especially in the form of a multitude of small and sealing nipples.

5. Heat-insulating lid according to one of the foregoing claims **characterized in that**, the upper part (3) is provided whith an additional heat-insulation, preferable in the form of a heat-insulating inside-layer.

6. Heat-insulating lid according to one of the foregoing claims **characterized in that**, the heat-storing medium is a liquid preferably with a freezing point below zero degrees centigrade or a gel.

7. Heat-insulating lid according to one of the foregoing claims **characterized in that**, the upper part (3) is equipped whith a handle (5) which preferably can be lowered.

8. Heat-insulating lid according to one of the foregoing claims **characterized in that**, the upper part (3) is equipped with an opening which can be opened from the outside, provided to take up cutlery or such things.

## Revendications

1. Couvercle thermo-isolant destiné à couvrir un récipient (1), pourvu, sur sa face inférieure, d'une couche d'étanchéité plane (2') destinée à reposer sur le récipient, composé d'une partie supérieure thermo-isolante (3) et d'une partie inférieure nettement moins thermo-isolante (2), la partie supérieure (3) étant fixée, d'une façon rigide et étanche, à la partie inférieure (2) en recouvrant la partie inférieure (2) et en formant un espace vide (4), et un moyen formant accumulateur calorifique, de préférence ductile, étant disposé dans l'espace vide (4), appliqué sur la face intérieure de la partie inférieure (2), et, en outre, la couche d'étanchéité (2'), qui se trouve sur la surface extérieure plane de la partie inférieure (2), étant plane et conçue de telle sorte qu'elle empêche des mouvements latéraux du couvercle sur le récipient (1) qu'il est destiné à couvrir.

2. Couvercle thermo-isolant selon la revendication 1, **caractérisé par le fait que** la couche d'étanchéité (2'), qui se trouve sur la surface extérieure de la partie inférieure se compose d'une matière empêchant le glissement.

3. Couvercle thermo-isolant selon la revendication 1, **caractérisé par le fait que** la couche d'étanchéité a la forme d'une surface de bordure périphérique dont l'étendue radiale correspond au diamètre de casseroles habituelles.

4. Couvercle thermo-isolant selon la revendication 1, 2 ou 3, **caractérisé par le fait que** la surface de la couche d'étanchéité (2') est conçue de telle sorte qu'elle empêche le glissement, notamment sous la forme d'une pluralité de petites rugosités qui sont en même temps étanches.

5. Couvercle thermo-isolant selon l'une des revendications précédentes, **caractérisé par le fait qu'**une isolation thermique supplémentaire est appliquée sur la partie supérieure (3), d'une façon préférentielle sous la forme d'une couche intérieure thermo-isolante.

6. Couvercle thermo-isolant selon l'une des revendications précédentes, **caractérisé par le fait que** le moyen formant accumulateur calorifique est un liquide ou une gelée ayant, d'une façon préférentielle, un point de congélation inférieur à zéro degré.

7. Couvercle thermo-isolant selon l'une des revendications précédentes, **caractérisé par le fait que** la partie supérieure (3) est munie d'une poignée (5), d'une façon préférentielle, escamotable.

8. Couvercle thermo-isolant selon l'une des revendications précédentes, **caractérisé par le fait qu'**il est prévu, sur la partie supérieure (3), une ouverture relevable destinée à recevoir des couverts ou des objets similaires.
